# EUROPÄISCHE PATENTANMELDUNG

(11) **EP 0 934 809 A1**
(43) Veröffentlichungstag der Anmeldung: **11.08.1999**
(21) Anmeldenummer: 99810012.7
(22) Anmeldetag: 11.01.1999
(51) Int. Cl.: B29C 45/14, B29C 70/68, B29C 70/78

(54) **Hitzeschild für ein Kraftfahrzeug**

(30) Priorität: 05.02.1998 CH 30398
(71) Anmelder: H. Weidmann AG, 8640 Rapperswil (CH)
(72) Erfinder: Koster, Casper, 8640 Rapperswil (CH); Rohr, Patrick, 75190 Passy (FR)
(74) Vertreter: Groner, Manfred

(57) **Zusammenfassung**

Das Hitzeschild weist eine wärmereflektierende erste Schicht (2) auf, die eine Metallfolie ist und die flächig mit einer zweiten, aus einem wärmedämmenden Kunststoff hergestellten Tragschicht (2) verbunden ist. Die Metallfolie ist haftungsmodifiziert und weist eine Haftschicht (4) auf. Die Tragschicht (2) ist auf der Seite dieser Haftschicht (4) an die Metallfolie angespritzt oder angegossen oder heiss angepresst. Das Hitzeschild lässt sich mit einer sehr dünnen Metallfolie im wesentlichen in einem Arbeitsschritt im Spritzgussverfahren und in sehr unterschiedlichen Raumformen herstellen.

## Beschreibung

Die Erfindung betrifft ein Hitzeschild für ein Kraftfahrzeug, mit einer wärmereflektierenden ersten Schicht, die eine Metallfolie ist und die flächig mit einer zweiten, aus einem wärmedämmenden Kunststoff hergestellten Tragschicht, verbunden ist.

Hitzeschilder dieser Art sind allgemein bekannt und dienen dazu, den Fahrerraum vor der Wärmeabstrahlung des Motors und des Auspuffs zu schützen. Diese Hitzeschilder sind entsprechend dem abzuschirmenden Gegenstand räumlich geformt und werden bisher sehr aufwendig und hauptsächlich in Handarbeit gefertigt. Verwendet werden beispielsweise Hitzeschilder, die aus mehreren Metallfolien hergestellt sind, welche am Rand durch Bördeln miteinander verbunden sind. Das Bördeln erfolgt vorwiegend in Handarbeit.

Aus der US-A-5,464,952 ist ein Hitzeschild bekannt geworden, das zum Abschirmen eines Auspuffrohrs vorgesehen ist und aus zwei Metallschichten besteht, zwischen denen eine lose Faserschicht angeordnet ist. Zum Binden der Faserschicht mit einer Spritzpistole in Handarbeit auf die Fasern ein aushärtendes Harz aufgetragen. Die Herstellung dieses Hitzeschildes erfordert mehrere Arbeitsschritte und ist sehr aufwendig und nur teilweise automatisierbar.

Die US-A-5,656,353 beschreibt ein Hitzeschild, das aus einer perforierten Metallfolie und einem Träger aus Kunststoff besteht. Die Metallfolie weist auf ihrer einen Seite mehrere Haken auf, welche in den Träger eingebettet sind und diesen formschlüssig mit der Metallfolie verbindet. Die Perforationen bilden Öffnungen, durch welche Wärme in den Träger einstrahlen und diesen schmelzen kann.

Die EP-A-0 455 061 zeigt ein Hitzeschild, bei dem zwischen zwei Schichten mit unterschiedlichem Ausdehnungskoeffizient ein Luftraum angeordnet ist. Bei einer Temperaturerhöhung vergrössert sich dieser Luftraum. Die beiden Schichten sind am Rand mit einem Band aus Silikonkautschuk miteinander verbunden. Die Herstellung eines solchen Hitzeschildes mit einer räumlichen Struktur dürfte schwierig sein.

Der Erfindung liegt die Aufgabe zugrunde, ein Hitzeschild der genannten Art zu schaffen, das mit einer räumlichen Struktur einfacher und weitgehend automatisiert herstellbar ist.

Die Aufgabe ist bei einem gattungsgemässen Hitzeschild dadurch gelöst, dass die Metallfolie haftungsmodifiziert ist und eine Haftschicht aufweist und dass die Tragschicht auf der Seite dieser Haftschicht an die Metallfolie angespritzt, angeordnet oder heiss aufgepresst ist.

Der Hitzeschild kann mit einer sehr dünnen Metallfolie im wesentlichen in einem Arbeitsschritt und in sehr unterschiedlichen räumlichen Formen hergestellt werden. Die Verbindung der Folie mit der Tragschicht erfolgt beim Hinterspritzen oder Angiessen der Folie und ist eine chemische Verbindung, die keine mechanische Verankerung erfordert. Ein Bördeln des Randes erübrigt sich. Zur Befestigung des Trägers im Kraftfahrzeug können an der Tragschicht in einfacher Weise Trag- und Befestigungsteile angespritzt werden. Dies ist im gleichen Arbeitsgang wie zum Hinterspritzen der Folie möglich. Es ist auch möglich, eingelegte Metallteile durch Umspritzen an der Tragschicht zu befestigen.

Ebenfalls können an der Tragschicht Verstärkungsrippen angeformt werden.

Der erfindungsgemässe Hitzeschild hat den Vorteil, dass er mit sehr geringem Gewicht und einer sehr dünnen Metallfolie herstellbar ist. Eine sehr dünne Metallfolie hat den Vorteil, dass sie entsprechend wenig Wärme aufnimmt. Das geringe Gewicht des Hitzeschildes bedeutet eine entsprechend geringe Belastung des Kraftfahrzeuges und ist deshalb aus ökonomischer Sicht vorteilhaft.

Nach einem vorteilhaften Verfahren wird zur Herstellung des Hitzeschildes die Metallfolie vorgeformt und in der geschlossenen Form hinterspritzt. Die endgültige Form erhält die Metallfolie beim Hinterspritzen. Damit ist es möglich, die Folie mit einer sehr präzisen und beispielsweise ebenen Oberfläche mit dem Träger zu verbinden. Das Verfahren ist dann besonders einfach, wenn gemäss einer Weiterbildung die Folie zwischen zwei Formhälften gelegt und durch Schliessen der Form vorgeformt und beim anschliessenden Hinterspritzen die Folie endgültig geformt wird. Die Folie erhält damit die Vorform durch ihre Deformation beim Schliessen der Form. Beim Hinterspritzen wird diese vorgeformte Folie an die Formfläche des einen Formteils angelegt und erhält damit die endgültige Form. Ein separater Arbeitsschritt und entsprechende Formwerkzeuge zum Herstellen der Vorform entfallen damit. Nach dem Entformen ist das Hitzeschild bereits ohne Nachbearbeitung fertig.

Die Metallfolie wird vorzugsweise durch Auftragen einer sehr dünnen Kunststoffschicht, beispielsweise aus Polypropylen haftungsmodifiziert. Diese Schicht schmilzt beim Hinterspritzen auf und verbindet den Träger mit der Folie. Eine Haftungsmodifikation ist auch durch Ätzen der Metallfolie und anschliessendes Beschichten möglich. Denkbar ist auch eine Ausführung, bei welcher auf die Metallfolie ein Kleber aufgetragen ist.

Ein Ausführungsbeispiel der Erfindung wird nachfolgend anhand der Zeichnung näher erläutert. Es zeigen:
Figur 1 einen Teilschnitt durch ein erfindungsgemässes Hitzeschild,
Figur 2 schematisch ein Hitzeschild über einem Auspuffrohr, und
Figuren 3 und 4 das Verfahren zur Herstellung eines erfindungsgemässen Hitzeschildes.

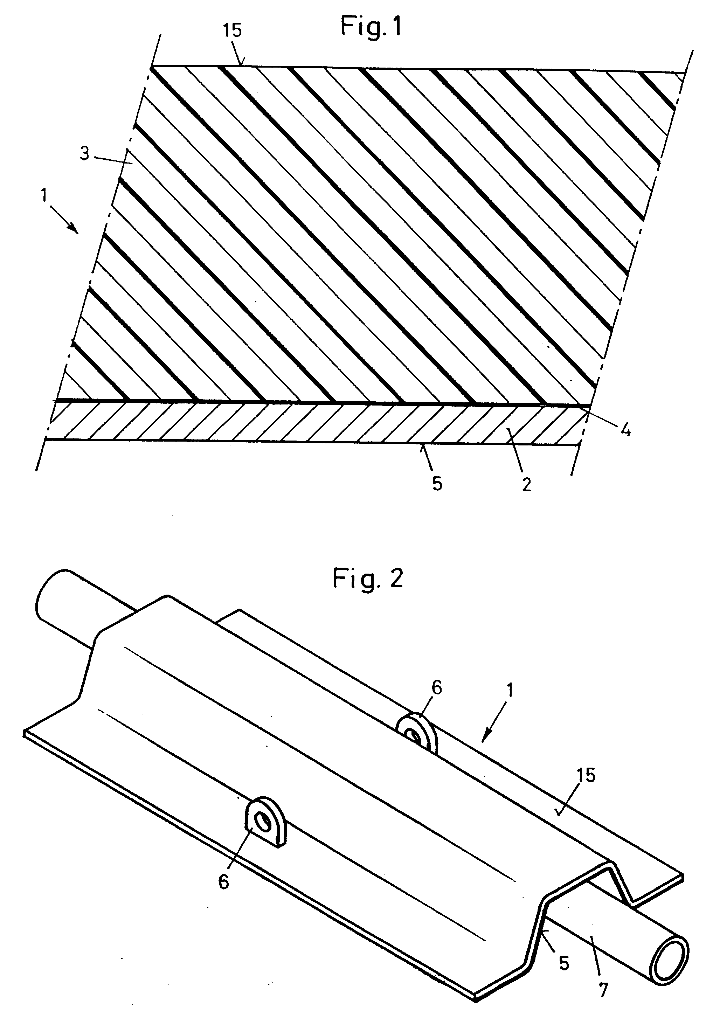

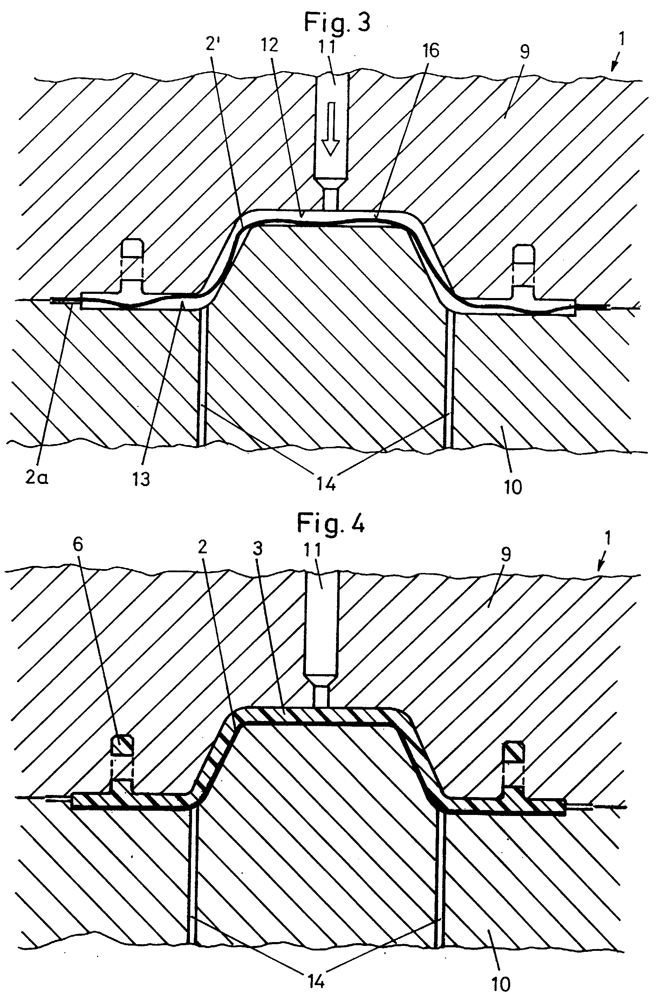

Die Figur 2 zeigt ein Hitzeschild 1, das mit angespritzten Befestigungsteilen an einer hier nicht gezeigten Karosserie befestigt ist. Das Hitzeschild 1 besitzt eine räumliche Struktur in der Form einer Rinne und befindet sich im Abstand über einem Auspuffrohr 7. Die dem Auspuffrohr gegenüberliegende Fläche 5 des Hitzeschildes 1 ist wäremereflektierend. Die vom Auspuffrohr 7 abstrahlende Wärme wird somit weitgehend an der Fläche 5 reflektiert und gelangt nicht in den Fahrerraum.

Der Hitzeschild 1 besteht aus einer vergleichsweise dünnen Metallfolie 2, einer Tragschicht 3 aus Kunststoff sowie einer verbindenden Haftschicht 4. Die bereits erwähnte Fläche 5 ist die Oberfläche der Metallfolie 2 und wärmereflektierend. Die Oberfläche 15 der Tragschicht 3 braucht nicht reflektierend zu sein. Die Haftschicht 4 verbindet die Metallfolie 2 mit dem Träger 3. Diese Haftschicht 4 ist beispielsweise eine aufgeschmolzene Kunststoffschicht. Der Kunststoff ist beispielsweise Polyethylen. Die Haftschicht 4 kann jedoch auch beispielsweise ein Kleber sein.

Die Stärke der Metallfolie 2 liegt im Bereich von 0,001 mm bis 0,1 mm. Vorzugsweise liegt die Stärke im Bereich von 0,03 mm bis 0,1 mm. In dieser Stärke kann die Metallfolie wie weiter unten beschrieben plastisch deformiert werden. Vorzugsweise besteht die Metallfolie aus Aluminium oder einem geeigneten rostfreien Stahl.

Die Tragschicht 3 besteht aus einem geeigneten Kunststoff und weist eine Stärke von 1 bis 4 mm, vorzugsweise 2 mm bis 3 mm auf. Die Tragschicht 3 wird durch Hinterspritzen der Metallfolie 2 hergestellt. Die Tragschicht 3 kann jedoch auch durch Angiessen oder heiss Aufpressen auf die Metallfolie aufgebracht werden. Das Hitzeschild 1 ist über seinen ganzen Bereich vorzugsweise wie in Figur 1 gezeigt dreischichtig.

Anhand der Figuren 3 und 4 wird nachfolgend beispielhaft die Herstellung des Hitzeschildes 1 im Spritzgussverfahren erläutert. Die bereits haftungsmodifizierte Folie 2' wird gemäss Figur 3 zwischen zwei Hälften 9 und 10 einer Spritzgussform 8 eingelegt. Beim Schliessen der beiden Formhälften 9 und 10 erhält die Folie 2' die gezeigte Vorform. Die Metallfolie 2' ist bereits etwas deformiert und hat bereits grundsätzlich die endgültige Form erhalten. Die Folie 2' kann an ihrem Rand 2a zwischen den beiden Formteilen 9 und 10 festgeklemmt sein. In der Figur 3 befindet sich die haftmodifizierte Fläche 16 oben. Die Folie 2' könnte auch über Bohrungen 14 angesaugt werden.

Zum Herstellen der Tragschicht 3 wird durch die Einspritzöffnung 11 der Form 8 Kunststoff in den Formhohlraum 12 eingespritzt. Dieser Hohlraum 12 wird vollständig ausgespritzt und hierbei legt sich die Folie 2' an die Formfläche 13 der unteren Formhälfte 10 und erhält so ihre endgültige Form. Beim Einspritzen des Kunststoffs in den Formhohlraum 12 wird die Folie 2' durch die heisse Kunststoffmasse auf ihrer Folienoberfläche 16 erwärmt und dadurch eine aufgetragene Haftschicht geschmolzen. Die Figur 4 zeigt die Form 8 nach dem Einspritzen des Kunststoffs. Die Tragschicht 3 sowie angeformte Befestigungsteile 6 sind gebildet. Der Hitzeschild 1 kann nun entformt werden und ist damit bereits gebrauchsfertig. Aufwendige Nachbearbeitungsarbeiten sind nicht erforderlich. Die in Figur 2 gezeigte Form des Hitzeschildes 1 ist lediglich ein Beispiel. Ein Hitzeschild 1 für einen Motor weist dann selbstverständlich eine auf den Motor ausgelegte räumliche Struktur auf. Das oben erwähnte Verfahren bleibt das gleiche.

## Patentansprüche

1. Hitzeschild für ein Kraftfahrzeug, mit einer wärmereflektierenden ersten Schicht (2), die eine Metallfolie ist und die flächig mit einer zweiten, aus einem wärmedämmenden Kunststoff hergestellten Tragschicht (2) verbunden ist, dadurch gekennzeichnet, dass die Metallfolie haftungsmodifiziert ist und eine Haftschicht (4) aufweist, und dass die Tragschicht auf der Seite dieser Haftschicht (4) an die Metallfolie angespritzt oder angegossen oder heiss angepresst ist.

2. Hitzeschild nach Anspruch 1, dadurch gekennzeichnet, dass die Metallfolie eine Stärke im Bereich von 0,001 mm bis 0,5 mm, vorzugsweise 0,01 mm bis 0,1 mm aufweist.

3. Hitzeschild nach Anspruch 1 oder 2, dadurch gekennzeichnet, dass die Metallfolie aus Aluminium oder aus rostfreiem Stahl hergestellt ist.

4. Hitzeschild nach einem der Ansprüche 1 bis 3, dadurch gekennzeichnet, dass die Tragschicht (3) eine Stärke im Bereich von 1 mm bis 4 mm, vorzugsweise 2 mm bis 3 mm aufweist.

5. Hitzeschild nach einem der Ansprüche 1 bis 4, dadurch gekennzeichnet, dass die Tragschicht (3) im Spritzgussverfahren aufgespritzt ist.

6. Verfahren zur Herstellung eines Hitzeschildes nach Anspruch 1, dadurch gekennzeichnet, dass:
a) die Metallfolie vorgeformt wird, und
b) in der geschlossenen Form (8) mit Kunststoff oder Kunstharz hinterspritzt, angegossen oder heiss angepresst wird.

7. Verfahren nach Anspruch 6, dadurch gekennzeichnet, dass die Metallfolie vor dem Einlegen in die Form (8) vorgeformt wird.

8. Verfahren nach Anspruch 6, dadurch gekennzeichnet, dass die Folie zwischen zwei Formhälften (9, 10) gelegt und durch Schliessen der Form (8) vorgeformt wird und dass bei anschliessendem Hinterspritzen die Folie endgültig geformt wird.

9. Verfahren nach einem der Ansprüche 6 bis 8, dadurch gekennzeichnet, dass auf die Folie ein bindendes Laminat aufgetragen wird, das beim Hinterspritzen eine molekulare Bindung zur Tragschicht ergibt.

10. Verfahren nach Anspruch 9, dadurch gekennzeichnet, dass das Laminat ein Kunststoff, vorzugsweise Polyethylen oder Polypropylen ist und dieser Kunststoff beim Hinterspritzen in der Form (8) geschmolzen wird.
